Europäisches Patentamt

European Patent Office

Office européen des brevets

(19)

(11) Numéro de publication : **0 486 417 B1**

(12) **FASCICULE DE BREVET EUROPEEN**

(45) Date de publication du fascicule du brevet :
01.03.95 Bulletin 95/09

(51) Int. Cl.⁶ : **G01B 11/04**, B21B 37/00,
G01P 3/56, G01S 17/58,
G01S 17/87

(21) Numéro de dépôt : 91470034.9

(22) Date de dépôt : 12.11.91

(54) **Procédé et dispositif de mesure du taux d'allongement subi par un produit dans une installation de laminage.**

(30) Priorité : 14.11.90 FR 9014175

(43) Date de publication de la demande :
20.05.92 Bulletin 92/21

(45) Mention de la délivrance du brevet :
01.03.95 Bulletin 95/09

(84) Etats contractants désignés :
AT BE CH DE DK ES FR GB GR IT LI LU NL SE

(56) Documents cités :
GB-A- 794 290
GB-A- 2 149 993
PATENT ABSTRACTS OF JAPAN, vol. 9, no.
312 (P-411)(2035), 7 décembre 1985 &
JP-A-60142265
PATENT ABSTRACTS OF JAPAN, vol. 13, no.
334 (M-855) 27 juillet 1989 & JP-A-1113105

(56) Documents cités :
MESURES REGULATION AUTOMATISME, vol.
52, no. 13, 19 Octobre 1987, Paris, FR, pages
81-84; "Tôles, câbles,...la vitesse contrôlée
par l'effet Doppler"

(73) Titulaire : SOLLAC
Immeuble Elysées-La Défense, 29 Le Parvis
F-92800 Puteaux (FR)

(72) Inventeur : Mineau, Jean-Luc
4, rue Sébastien Leclerc
F-57000 Metz (FR)
Inventeur : Jeuniaux, François
1, rue du Bois l'Abbé
F-54560 Sancy (FR)

(74) Mandataire : Ventavoli, Roger
TECHMETAL PROMOTION
Ile de France - 4, place de la Pyramide
F-92070 PARIS-LA-DEFENSE Cédex 33 (FR)

EP 0 486 417 B1

**EP 0 486 417 B1**

## Description

L'invention concerne la mesure et la régulation du taux d'allongement réalisé dans une installation de laminage. Ce taux d'allongement est défini à partir de la différence de vitesse du produit laminé entre l'amont et l'aval de l'installation de laminage.

Une méthode connue pour déterminer ce taux de laminage consiste donc à mesurer la vitesse en amont et en aval de l'installation de laminage et de calculer ensuite la différence de ces deux mesures. Lorsque le taux d'allongement est faible, ce qui est le cas en particulier pour les opérations de skin-pass, la précision de la mesure des vitesses amont et aval n'est pas suffisante par rapport à la faible variation de vitesse du produit en amont et en aval de l'installation de laminage si bien que l'on ne peut effectuer de mesures précises, ce qui exclut en particulier la possibilité de régulation en agissant sur les paramètres de l'installation de laminage.

Le document JP 60142265 enseigne de mesurer la différence de vitesse entre deux objets en défilement en envoyant sur ces objets des faisceaux laser issus du même émetteur, au moyen de fibres optiques, selon un angle θ. Les faisceaux réfléchis selon un angle ∅ sont recueillis, également au moyen de fibres optiques et superposés l'un à l'autre, pour former un système d'interférences. L'analyse de ce système permet de déduire la différence de vitesse entre les deux objets.

La présente invention se propose de fournir un procédé et un dispositif qui rendent possible de calculer le taux d'allongement avec une précision suffisante qui permet en particulier d'effectuer une régulation sur l'installation de laminage concernée.

A cet effet, l'invention a pour objet un procédé de mesure du taux d'allongement subi par un produit dans une installation de laminage, par exemple d'un produit métallurgique, dans lequel on mesure la différence entre la vitesse du produit en amont et la vitesse du produit en aval de l'installation de laminage, caractérisé en ce qu'on illumine le produit en deux points d'impact situés respectivement en amont et en aval de l'installation de laminage par une source unique ou deux sources synchrones et cohérentes de lumière monochromatique, en ce qu'à chaque point d'impact le faisceau incident est envoyé selon deux directions symétriques, les faisceaux réfléchis étant recueillis selon la normale à la surface du produit, en ce que les faisceaux réfléchis par le produit sont superposés, et en ce qu'on réalise une analyse fréquentielle de l'onde résultant de cette superposition pour en mesurer la fréquence de battement.

L'invention a également pour objet un dispositif pour la mise en oeuvre du procédé précédent, caractérisé en ce qu'il comporte une source d'émission laser, un premier séparateur de faisceau fournissant à sa sortie deux fibres optiques émettrices amont et aval, deux séparateurs recevant chacun une desdites fibres optiques émettrices aval ou amont et fournissant à leur sortie chacun deux fibres optiques émettrices dont les extrémités sont disposées au voisinage des points d'impact amont et aval sur le produit, deux fibres optiques réceptrices dont une extrémité est disposée au voisinage des points d'impact amont et aval et l'autre extrémité est raccordée à un dispositif de superposition des ondes réfléchies, et des moyens de traitement du signal ainsi obtenu pour déterminer sa fréquence de battement et en déduire la différence entre les vitesses du produit aux points d'impact amont et aval.

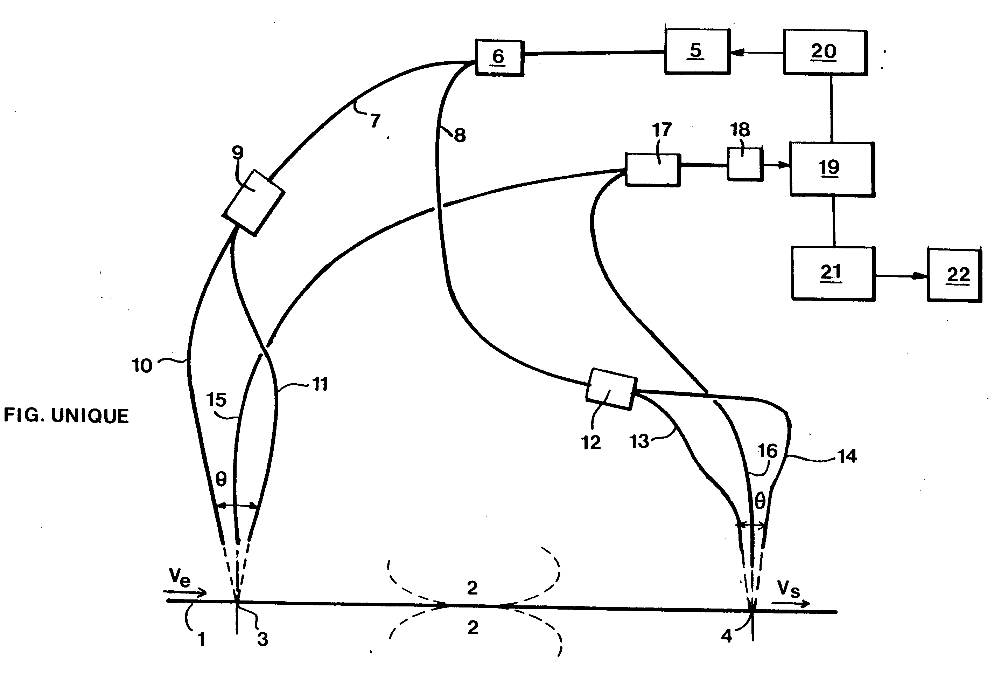

D'autres caractéristiques et avantages de l'invention ressortiront de la description qui suit d'un exemple de réalisation, faite en se référant à la figure unique annexée représentant de manière schématique un dispositif conforme à la présente invention.

On voit sur la figure unique un produit, tel qu'un produit sidérurgique se présentant sous la forme d'une bande continue 1 qui traverse une installation de laminage schématisée en 2, la partie amont se trouvant à gauche de la figure et la partie aval à droite.

Selon l'inventon, on illumine la bande de produit sidérurgique 1 en deux endroits localisés 3 et 4 situés respectivement en amont et en aval de l'installation de laminage 2. Du fait de la réduction d'épaisseur subie par le produit lors de son laminage, le produit a, en ces deux endroits 3 et 4, une vitesse respectivement égale à Ve et Vs, avec Ve<Vs. Un faisceau émis par une source monochromatique 5 comportant un laser est envoyé sur un premier coupleur à fibres optiques 6 constituant un séparateur et qui fournit à sa sortie deux fibres optiques émettrices amont et aval 7 et 8. La première fibre optique émettrice 7 est envoyée sur un deuxième coupleur 9 qui fournit en sortie deux fibres optiques 10 et 11 qui illuminent l'emplacement amont 3 sous des angles symétriques, l'angle des deux faisceaux incidents étant égal à θ.

De manière analogue, la fibre optique 8 est envoyée sur un coupleur 12 faisant fonction de séparateur et fournissant deux fibres optiques 13 et 14 illuminant l'emplacement aval 4 sous des angles symétriques, l'angle de ces deux faisceaux incidents étant également égal à θ ; θ prend une valeur de l'ordre de quelques degrés, sachant que la précision de la mesure est d'autant meilleure que cette valeur est faible.

A chacun des points d'impact 3 et 4, une fibre optique réceptrice 15, respectivement 16, reçoit le faisceau réfléchi avec un grand angle solide, par exemple sous une incidence normale. Les faisceaux réfléchis fournis par les fibres optiques 15 et 16 sont superposés dans un coupleur à fibres optiques 17 dont le signal de sortie

2

est envoyé sur un photodétecteur 18.

On envoie donc sur les points d'impact 3 et 4 des ondes lumineuses cohérentes entre elles obtenues à partir d'une source unique monochromatique, à savoir le laser 5, et de coupleurs-séparateurs de fibres optiques. On peut également illuminer chaque point d'impact par deux ondes lumineuses obtenues à partir de deux sources monochromatiques synchrones et cohérentes entre elles.

Les ondes lumineuses recueillies par les fibres réceptrices 15 et 16 aux points d'impact 3 et 4 résultent de la somme des deux ondes lumineuses incidentes, et elles comprennent chacune une fréquence qui est fonction de la vitesse du produit au point d'impact. Ces deux ondes réfléchies sont superposées dans le coupleur 17, ce qui crée un mélange de fréquences.

Cette superposition peut, selon une variante, être obtenue au moyen de deux photodétecteurs recueillant chacun une des ondes lumineuses réfléchies et dont les signaux de sortie sont ensuite mélangés de manière connue par un dispositif électronique. Dans cette variante, les deux photodétecteurs remplacent le coupleur 17 et le photodétecteur 18.

Il résulte de la superposition des deux ondes lumineuses de fréquences différentes un phénomène de battement qui fournit une information fréquentielle relative à la différence des vitesses aux deux points d'impact 3 et 4.

Le signal obtenu est envoyé dans un photodétecteur 18 puis dans un détecteur synchrone 19. Celui reçoit un signal de modulation fourni par un modulateur 20 dont le signal de sortie est également envoyé sur la source à laser 5. Ce signal de sortie sert de signal de référence au détecteur synchrone 19, qui peut ainsi séparer le signal de battement du bruit dans lequel il est noyé. Le signal fourni par le détecteur synchrone 19 est envoyé sur un dispositif de traitement du signal 21. Ce traitement consiste à analyser le spectre pour en extraire la fréquence de battement recherchée qui correspond à la différence des vitesses du produit en amont et en aval de l'installation de laminage.

A l'aide de cette analyse fréquentielle, le dispositif 21 calcule la différence des vitesses du produit dans les zones 3 et 4, et en déduit le taux d'allongement qui est, par exemple, affiché sur un dispositif de visualisation 22.

Cette analyse repose sur le principe suivant. Les ondes lumineuses émises ou réfléchies peuvent être caractérisées par leur vecteur champ électrique $\vec{E}_i(f)$, f étant la fréquence de l'onde. Les ondes émises de manière synchrone par les quatre fibres émettrices 10, 11, 13, 14 ont la même fréquence $f_o$, et ne diffèrent que par leurs directions et leurs points d'impact 3, 4 sur le produit 1. A l'entrée du produit 1 dans l'installation de laminage 2, c'est-à-dire au point 3 où il possède la vitesse Ve, le signal recueilli par la fibre réceptrice 15 est caractérisé par la somme des vecteurs $\vec{E1}$ ($f_o + f_{ge}$) et $\vec{E2}$ ($f_o - f_{ge}$) étant la fréquence de glissement correspondant au décalage Doppler dû à la vitesse Ve. A la sortie du produit 1 de l'installation de laminage 2, c'est-à-dire au point 4 où il possède la vitesse Vs supérieure à Ve, le signal recueilli par la fibre réceptrice 16 est caractérisé par la somme des vecteurs $E3$($f_o + f_{gs}$) et $\vec{E4}$ ($f_o - f_{gs}$), $f_{gs}$ étant la fréquence de glissement correspondant au décalage Doppler due à la vitesse Vs. Ces signaux après superposition dans le coupleur 17, donnent un signal d'intensité I, avec

$$I = <\vec{E1} + \vec{E2} + \vec{E3} + \vec{E4}>$$
$$d'où \quad I = C + 2<\vec{E1}.\vec{E2}> + 2<\vec{E1}.\vec{E3}> + 2<\vec{E1}.\vec{E4}> + 2<\vec{E2}.\vec{E3}> + 2<\vec{E2}.\vec{E4}> + 2<\vec{E3}.\vec{E4}>$$

où :

- C est une constante
- $<\vec{E1}.\vec{E2}>$ est fonction de $f_{ge}$, donc de la vitesse d'entrée Ve
- $<\vec{E3}.\vec{E4}>$ est fonction de $f_{gs}$, donc de la vitesse de sortie Vs
- les autres termes sont fonction de $f_{gs} + f_{ge}$ et $f_{gs} - f_{ge}$, donc de la vitesse différentielle Vs-Ve du produit 1.

L'analyse du signal recueilli par le photodétecteur 18 et les appareils qui lui font suite permet donc, par des méthodes de calcul classiques, de déterminer cette vitesse différentielle Vs-Ve, avec une grande précision, et d'en déduire le taux d'allongement du produit 1 fourni par l'installation de laminage 2.

Notons également que dans la configuration exemplifiée, la source monochromatique unique peut être remplacée par deux sources monochromatiques synchrones et cohérentes auxquelles sont directement reliées les fibres optiques émettrices aval et amont 7, 8.

Cette mesure peut être réalisée très rapidement, ce qui permet de prévoir un dispositif de régulation des paramètres de réglage de l'installation de laminage 2 de manière à obtenir un taux d'allongement constant déterminé.

L'invention s'applique à la détermination du taux d'allongement de tout produit subissant un laminage, et en premier lieu aux produits métallurgiques, en acier ou en aluminium par exemple.

## Revendications

1. Procédé de mesure du taux d'allongement subi par un produit dans une installation de laminage, par exemple d'un produit métallurgique, dans lequel on mesure la différence entre la vitesse du produit en amont et la vitesse du produit en aval de l'installation de laminage, caractérisé en ce qu'on illumine en deux points d'impact situés respectivement en amont et en aval de l'installation de laminage par une source unique ou deux sources synchrones et cohérentes de lumière monochromatique, en ce qu'à chaque point d'impact le faisceau incident est envoyé selon deux directions symétriques, les faisceaux réfléchis étant recueillis selon la normale à la surface du produit, en ce que les faisceaux réfléchis par le produit sont superposés, et en ce qu'on réalise une analyse fréquentielle de l'onde résultant de cette superposition pour en mesurer la fréquence de battement.

2. Dispositif pour la mise en oeuvre du procédé selon la revendication 1, caractérisé en ce qu'il comporte une source d'émission laser (5), un premier séparateur de faisceau (6) fournissant à sa sortie deux fibres optiques émettrices amont et aval (7,8), deux séparateurs (9,12) recevant chacun une desdites fibres optiques émettrices aval ou amont (7,8) et fournissant à leur sortie chacun deux fibres optiques émettrices (10, 11, 13, 14) dont les extrémités sont disposées au voisinage des points d'impact amont (3) et aval (4) sur le produit (1), deux fibres optiques réceptrices (15,16) dont une extrémité est disposée au voisinage des points d'impact amont (3) et aval (4) et l'autre extrémité est raccordée à un dispositif de superposition des ondes réfléchies (17), et des moyens (18, 19, 20, 21) de traitement du signal ainsi obtenu pour déterminer sa fréquence de battement et en déduire la différence entre les vitesses du produit (Ve, Vs) aux points d'impact amont et aval.

3. Dispositif selon la revendication 2, caractérisé en ce que le dispositif (17) de superposition des ondes réfléchies est un coupleur à fibres optiques.

4. Dispositif selon la revendication 2, caractérisé en ce que le dispositif (17) de superposition des ondes réfléchies est constitué par deux photodétecteurs recueillant chacun les ondes réfléchies par le produit (1) et délivrant des signaux électriques et par des moyens pour mélanger lesdits signaux.

## Patentansprüche

1. Verfahren zum Messen des Ausmaßes der Verlängerung, der ein Produkt in einer Walzanlage unterworfen ist, beispielsweise eines metallurgischen Produktes, bei dem man die Differenz zwischen der Geschwindigkeit des Produktes stromaufwärts und der Geschwindigkeit des Produktes stromabwärts der Walzanlage mißt, dadurch gekennzeichnet, daß man an zwei, jeweils stromaufwärts und stromabwärts der Walzanlage gelegenen Auftreffpunkten mit einer einzigen Quelle oder zwei synchronen und kohärenten Quellen monochromatischen Lichtes beleuchtet, daß an jedem Auftreffpunkte der einfallende Strahl nach zwei symmetrischen Richtungen ausgesandt wird, wobei die reflektierten Strahlen entlang der Normalen auf die Oberfläche des Produktes gesammelt werden, daß die vom Produkt reflektierten Strahlen überlagert werden, und daß man eine Frequenzanalyse der aus dieser Überlagerung resultierenden Welle durchführt, um die Interferenzfrequenz davon zu bestimmen.

2. Vorrichtung zur Durchführung des Verfahrens nach Anspruch 1, dadurch gekennzeichnet, daß sie eine Lasersendequelle (5), einen ersten, an seinem Ausgange zwei optische Sendefasern (7, 8) stromaufwärts und stromabwärts beliefernden Strahlenteiler (6), zwei Teiler (9, 12), die jeweils eine der optischen Sendefasern (7, 8) von stromaufwärts oder stromabwärts aufnehmen und an ihrem Ausgange jeweils zwei optische Sendefasern (10, 11, 13, 14) beliefern, deren Enden den Auftreffpunkten auf dem Produkt (1)

EP 0 486 417 B1

stromaufwärts (3) und stromabwärts (4) benachbart angeordnet sind, zwei optische Aufnahmefasern (15, 16), deren eines Ende jeweils den Auftreffpunkten stromaufwärts (3) bzw. stromabwärts (4) benachbart ist, und deren anderes Ende an eine Überlagerungseinrichtung (17) für die reflektierten Wellen angeschlossen ist, und Einrichtungen (18, 19, 20, 21) für die Verarbeitung des so erhaltenen Signales zum Bestimmen seiner Interferenzfrequenz und um davon die Differenz zwischen den Geschwindigkeiten des Produktes (Ve, Vs) an den Auftreffpunkten Stromaufwärts und stromabwärts abzuleiten.

3. Vorrichtung nach Anspruch 2, dadurch gekennzeichnet, daß die Überlagerungseinrichtung (17) für die reflektierten Wellen ein optischer Faserkoppler ist.

4. Vorrichtung nach Anspruch 2, dadurch gekennzeichnet, daß die Überlagerungseinrichtung (17) für die reflektierten Wellen von zwei Photodetektoren gebildet ist, von denen jeder die vom Produkt (1) reflektierten Wellen sammelt und elektrische Signale liefert, sowie von Einrichtungen zum Mischen der Signale.

## Claims

1. Procedure for measuring the elongation ratio undergone by a product in a rolling installation, for example for rolling a metallurgical product, in which the difference between the speed of the product upstream and the speed of the product downstream of the rolling installation is measured, characterized in that [lacuna] is illuminated, at two points of impact located respectively upstream and downstream of the rolling installation, by a single source, or two synchronous and coherent sources, of monochromatic light, in that, at each point of impact, the incident beam is sent in two symmetrical directions, the reflected beams being picked up along the normal to the surface of the product, in that the beams reflected by the product are superposed, and in that a frequency analysis of the wave resulting from this superposition is carried out in order to measure the beat frequency thereof.

2. Device for the implementation of the procedure according to Claim 1, characterized in that it includes a source (5) of laser emission, a first beam splitter (6) supplying, at its output, two, upstream and downstream, emitting optical fibres (7, 8), two splitters (9, 12) each receiving one, the downstream or upstream one, of the said emitting optical fibres (7, 8) and each supplying, at their output, two emitting optical fibres (10, 11, 13, 14), the ends of which are arranged in the vicinity of the upstream (3) and downstream (4) points of impact on the product (1), two receiving optical fibres (15, 16), one end of which is arranged in the vicinity of the upstream (3) and downstream (4) points of impact and the other end is connected to a device for superposing the reflected waves (17), and means (18, 19, 20, 21) for processing the signal thus obtained in order to determine its beat frequency and to deduce therefrom the difference between the speeds (Ve, Vs) of the product at the upstream and downstream points of impact.

3. Device according to Claim 2, characterized in that the device (17) for superposing the reflected waves is a fibre-optic coupler.

4. Device according to Claim 2, characterized in that the device (17) for superposing the reflected waves is constituted by two photodetectors each picking up the waves reflected by the product (1) and delivering electrical signals and by means for mixing the said signals.

5

FIG. UNIQUE